# EUROPEAN PATENT APPLICATION

(11) **EP 4 708 523 A2**
(43) Date of publication of application: **11.03.2026**
(21) Application number: 25187900.3
(22) Date of filing: 07.07.2025
(51) Int. Cl.: H01M 50/289, H01M 50/291, A62C 3/16

(54) **BATTERY MODULE**

(30) Priority: 03.09.2024 KR 20240118936
(71) Applicant: SAMSUNG SDI CO., LTD., Yongin-si, Gyeonggi-do 17084 (KR)
(72) Inventor: SHIN, Joonho, 17084 Yongin-si (KR)
(74) Representative: Marks & Clerk LLP

(57) **Abstract**

A battery module (100) includes: a plurality of battery cells (110) arranged in parallel in a first direction; a housing (130, 135, 170) accommodating the plurality of battery cells; and a fire-extinguishing pipe (120) in the housing and extending in the first direction. The fire-extinguishing pipe includes a plurality of metal knitting yarns (125) between an inner surface (121) and an outer surface (123) of the fire-extinguishing pipe, and the plurality of metal knitting yarns extend in the first direction and are spaced apart from one another in a circumferential direction of the fire-extinguishing pipe.

## Description

### BACKGROUND

### 1. Field

Aspects of embodiments of the present disclosure relate to a battery module.

### 2. Description of the Related Art

A secondary battery is designed to be charged and discharged, unlike a primary battery, which is not designed to be rechargeable. A low-capacity secondary battery is used in a portable, small-sized electronic device, such as a smartphone, a feature phone, a laptop computer, a digital camera, and a camcorder, while a largecapacity secondary battery is widely used as a power source for driving a motor in a hybrid vehicle, an electric vehicle, etc. and as a battery for storing electric power. A secondary battery generally includes an electrode assembly including a cathode and an anode, a case accommodating the electrode assembly, and an electrode terminal connected to the electrode assembly.

The above information disclosed in this Background section is for enhancement of understanding of the background of the present disclosure, and therefore, it may contain information that does not form the related (or prior) art.

### SUMMARY

Embodiments of the present disclosure provide a battery module exhibiting improved stability.

However, the aspects and features of the present disclosure are not limited to the above, and other aspects and features not mentioned herein will be clearly understood by those skilled in the art from the following disclosure.

Additional aspects and features will be set forth, in part, in the description that follows and, in part, will be apparent from the description or may be learned by practice of the described embodiments of the present disclosure.

According to an embodiment of the present disclosure, a battery module includes a plurality of battery cells arranged in parallel in a first direction, a housing accommodating the plurality of battery cells, and a fire-extinguishing pipe in the housing and extending in the first direction. The fire-extinguishing pipe includes a plurality of metal knitting yarns between an inner surface and an outer surface of the fire-extinguishing pipe, and the plurality of metal knitting yarns extend in the first direction and are spaced apart from one another in a circumferential direction of the fire-extinguishing pipe.

The plurality of battery cells (e.g. ones of the plurality of battery cells) may form a plurality of cell units that are arranged in a second direction perpendicular to the first direction, a spacer may be arranged between the plurality of cell units, and the fire-extinguishing pipe may be fixed to the spacer.

The spacer may include a lower spacer, an upper spacer above the lower spacer and spaced apart from the lower spacer, and a plurality of guide portions connecting the lower spacer and the upper spacer to each other. The plurality of guide portions may fix a location of the fire-extinguishing pipe, and the guide portions may each have a convex shape to at least partially surround an outer surface of the fire-extinguishing pipe and face the battery cells.

The plurality of guide portions may include first guides and second guides having convex shapes facing the cell units on opposite sides with respect to the fire-extinguishing pipe, and the first guides and the second guides may be alternately arranged.

The fire-extinguishing pipe may be disposed at a point within a range of 30% to 90% of a height of the battery cells.

The battery module may further include a second spacer between the plurality of battery cells.

The battery module may further include a pair of end plates pressing the plurality of cell units in the first direction and a stopper in at least one of the pair of end plates and to which the fire-extinguishing pipe is coupled. The stopper may be on an outer surface of at least one of the pair of end plates in a direction perpendicular to the first direction to define a position of the fire-extinguishing pipe.

The fire-extinguishing pipe may include at least one of polyamide (PA), polycarbonate (PC), polyether ether ketone (PEEK), polyetherketoneketone (PEKK), polyphenylene sulfide (PPS), polyether imide (PEI), polyether sulfone (PES), or polyimide (PI).

The fire-extinguishing pipe may be located on an upper surface of the spacer.

The upper surface of the spacer may have a shape conforming to the outer surface of the fire-extinguishing pipe.

A height of the spacer may be within a range of 30% to 90% of a height of the battery cells.

According to another embodiment of the present disclosure, a battery module includes a plurality of cell units each including a plurality of battery cells arranged in parallel in a first direction, the plurality of unit cells being arranged in a second direction perpendicular to the first direction, a spacer extending between the plurality of cell units in the first direction, and a fire-extinguishing pipe on an upper surface of the spacer.

An upper surface of the spacer may have a shape conforming to an outer surface of the fire-extinguishing pipe.

A height of the spacer may be within a range of 30% to 90% of a height of the battery cells.

The fire-extinguishing pipe may include a plurality of metal knitting yarns between an inner surface and an outer surface of the fire-extinguishing pipe, and the plurality of metal knitting yarns may extend in the first direction and may be spaced apart from one another in a circumferential direction of the fire-extinguishing pipe.

The battery module may further include a second spacer between the plurality of battery cells.

The fire-extinguishing pipe includes at least one of polyamide (PA), polycarbonate (PC), polyether ether ketone (PEEK), polyetherketoneketone (PEKK), polyphenylene sulfide (PPS), polyether imide (PEI), polyether sulfone (PES), or polyimide (PI).

The plurality of metal knitting yarns may include three or more metal knitting yarns.

The battery module may further include a pair of end plates pressing the plurality of cell units in a direction parallel to the first direction.

The battery module may further include a stopper in at least one of the pair of end plates and to which the fire-extinguishing pipe is coupled. The stopper may be on an outer surface of at least one of the pair of end plates in a direction perpendicular to the first direction to define a position of the fire-extinguishing pipe.

At least some of the above and other features of the invention are set out in the claims.

### BRIEF DESCRIPTION OF THE DRAWINGS

The accompanying drawings illustrate embodiments of the present disclosure and, together with the foregoing disclosure, provide a further understanding of the aspects and features of the present disclosure. Thus, the present disclosure is not construed as being limited to the drawing.

The above and other aspects and features of embodiments of the present disclosure will be more apparent from the following description taken in conjunction with the accompanying drawings, in which:
FIG. 1 is a perspective view of a battery module according to an embodiment of the present disclosure;
FIG. 2 is a perspective view of a battery cell included in the battery module shown in FIG. 1;
FIG. 3 is a perspective view of battery cells and a fire-extinguishing pipe in the battery module shown in FIG. 1;
FIG. 4 is a perspective view of a fire-extinguishing pipe and a stopper shown in FIG. 3;
FIG. 5 is a schematic cross-sectional view of the fire-extinguishing pipe shown in FIG. 4;
FIG. 6 is a perspective view of the battery module shown in FIG. 1;
FIG. 7 is a perspective view of a spacer included in the battery module shown in FIG. 6;
FIG. 8 is a perspective view of a battery module according to another example of the present disclosure; and
FIG. 9 is a perspective view of a spacer included in the battery module shown in FIG. 8.

### DETAILED DESCRIPTION

Reference will now be made, in detail, to embodiments, examples of which are illustrated in the accompanying drawings. Like reference numerals refer to like elements throughout. In this regard, the illustrated embodiments may have different forms and should not be construed as being limited to the descriptions set forth herein. Accordingly, embodiments are merely described below, by referring to the figures, to explain aspects and features of the present disclosure. As used herein, the term "and/or" includes any and all combinations of one or more of the associated listed items. Expressions, such as "at least one of," when preceding a list of elements, modify the entire list of elements and do not modify the individual elements of the list.

Hereinafter, one or more embodiments of the present disclosure will be described, in detail, with reference to accompanying drawings. Prior to the description, it should be understood that the terms used in the specification and the appended claims should not be construed as being limited to their general and dictionary meanings but should be interpreted based on meanings and concepts corresponding to technical aspects of the present disclosure on the basis of the principle that the inventor is allowed to define terms appropriately for the best explanation. Therefore, the description proposed herein is just an example for the purpose of illustrations and is not intended to limit the scope of the present disclosure, so it should be understood that other equivalents and modifications could be made thereto without departing from the scope of the present disclosure.

In addition, it will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof. When the embodiments are described, the use of "may" signifies "at least one embodiment".

In addition, the accompanying drawings may not be shown according to the actual scale to help understand the disclosure, and the dimensions of some components may be exaggerated.

The term equal refers to 'substantially equal'. Accordingly, substantially equal may include the deviation regarded as a low level in the corresponding technical field, for example, the deviation of about 5% or less. In addition, a uniform parameter in an area may refer to uniform from the average point of view.

Expressions including ordinal numbers, such as "first" and "second," indicate various elements, but the above expressions do not limit the elements. These terms are used to distinguish one element from another, and unless the context clearly indicates otherwise, a first element may be a second element.

As used herein, the singular forms are intended to include the plural forms as well, unless the context clearly indicates otherwise.

It will be understood that when an element is referred to being "on (or below)" or "above (or under)" another element, it may be positioned in contact with an upper surface (or a lower surface) of the other element, but another element may be positioned between the element and the other element on (or below) the element.

It will be further understood that when an element is referred to as being "connected", "coupled" or "joined" to another element, the elements may be directly connected or joined to each other, but intervening elements may be present between them or each element may be "connected", "coupled" or "joined" to each other through another element. It will be understood that when an element is referred to as being "electrically coupled" to another element, the element can be directly electrically coupled to another element or intervening elements may be present.

Throughout the specification, the terms "A and/or B" imply A, B, or A and B, unless otherwise defined. That is, the term "and/or" includes all or various combinations of a plurality of items that are related and arranged. The terms "C to D" imply C or more and D or less, unless otherwise described. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively.

The terminology used herein is for the purpose of describing embodiments of the present disclosure and is not intended to be limiting of the present disclosure.

Embodiments will be described below in more detail with reference to the accompanying drawings. Those components that are the same or are in correspondence are rendered the same reference numeral regardless of the figure number.

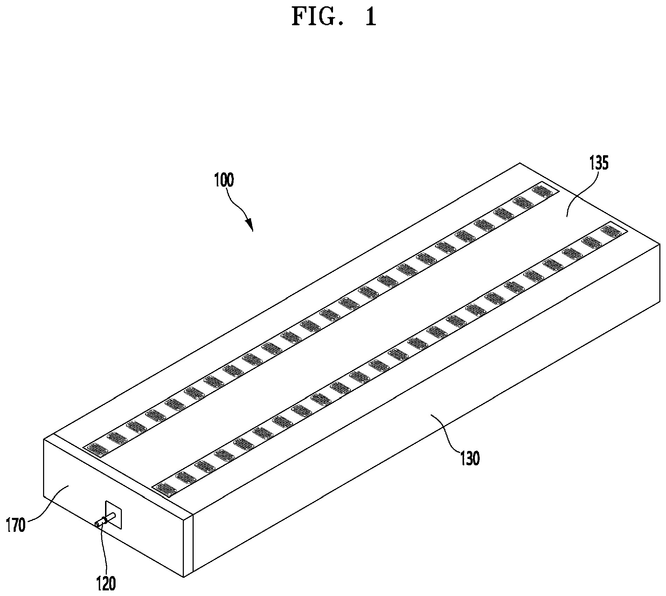

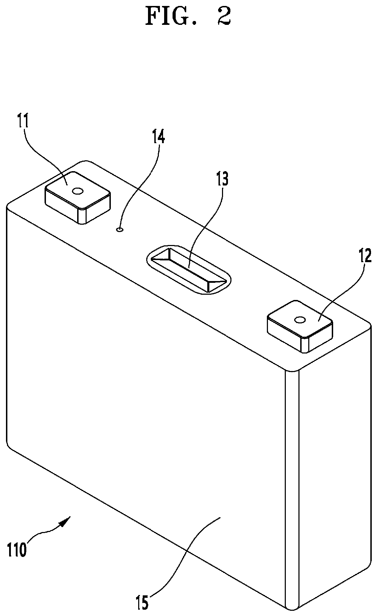

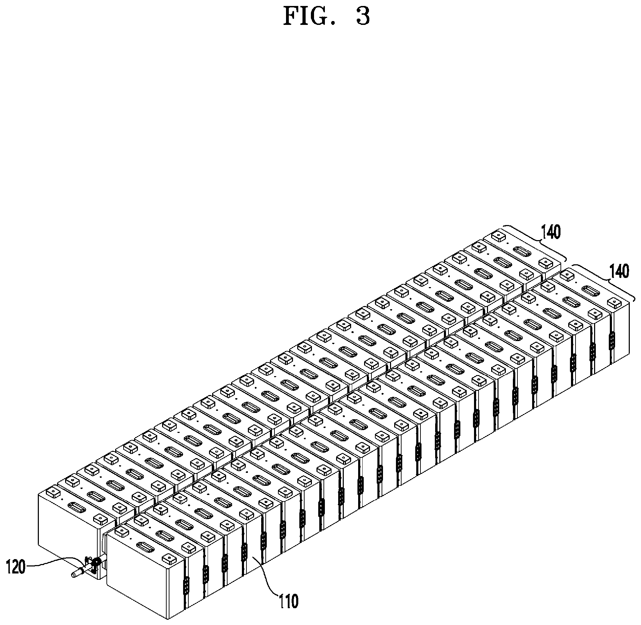

FIG. 1 is a perspective view of a battery module 100 according to an embodiment of the present disclosure, FIG. 2 is a perspective view of a battery cell 110 included in the battery module shown in FIG. 1, and FIG. 3 is a perspective view of battery cells 110 and a fire-extinguishing pipe 120 in the battery module 100 shown in FIG. 1.

The battery module 100, according to an embodiment of the present disclosure, includes a plurality of battery cells 110 arranged in one direction, a fire-extinguishing pipe 120, and a housing 130, 135, and 170 accommodating the plurality of battery cells 110 and the fire-extinguishing pipe 120.

Referring to FIG. 1, the plurality of battery cells 110 may be arranged in one direction such that larger surfaces of the battery cells 110 face each other, and the plurality of battery cells 110 may be fixed by the housing 130, 135, and 170. The housing 130, 135, and 170 may include a pair of end plates 170 facing larger surfaces of the battery cells 110, side plates 130, a bottom plate and top plate 135 connecting the pair of end plates 170 to each other. The side plate 130 may support side surfaces of the battery cells 110, the bottom plate may support bottom surfaces of the battery cells 110, and the top plate 135 may support upper surfaces of the battery cells 110. Also, the pair of end plates 170, the side plates 130, and the bottom plate and top plate 135 may be connected via members, such as bolts, etc.

Referring to FIG. 2, the battery cell 110 may include a battery case 15 and an electrode assembly and electrolyte accommodated in the battery case 15. The electrode assembly and the electrolyte may electrochemically react and generate energy. Terminal portions 11 and 12, a vent 13 that is a discharge passage of excess gas generated from inside, and an electrolyte injection port 14 for injecting the electrolyte into the battery case 15 may be provided at one side of the battery cell 110. The terminal portions 11 and 12 of the battery cell 110 may include a cathode terminal 11 and an anode terminal 12 having different polarities from each other, and the terminal portions 11 and 12 of neighboring battery cells 110 may be electrically connected to each other in series or in parallel via connection tabs. In addition, the present disclosure is not limited thereto, and various connecting structures may be adopted as necessary. Also, the number and arrangement of the battery cells are not limited to the structure shown in FIG. 1 but may be changed.

Referring to FIG. 3, the plurality of battery cells 110 may be arranged in one direction such that larger surfaces of the battery cells 110 face each other and may form a cell unit 140, that is, a set of the plurality of battery cells 110 arranged in one column.

The battery module 100 may include the cell units 140 that form a plurality of columns in a direction perpendicular to the direction in which the plurality of battery cells 110 are arranged. For example, the battery module 100 may include two columns of cell units 140.

The fire-extinguishing pipe 120 is accommodated in the battery module 100 and extends in the direction in which the battery cells 110 are arranged. The fire-extinguishing pipe 120 may be located between the cell units 140 or between the cell unit 140 and the side plate 130.

The fire-extinguishing pipe 120 is a tube through which a fire-extinguishing agent flows and may be a component that moves and sprays the fire-extinguishing agent when a thermal runaway occurs in one or more of the battery cells 110. The fire-extinguishing pipe 120 extends into the battery module 100 and, when a battery cell 110 experiences thermal runaway, melts around the corresponding battery cell 110 to immerse the corresponding battery cell 110 in a fire-extinguishing agent. A temperature of the battery cell 110 immersed in the fire-extinguishing agent is reduced, and thus, an effect of extinguishing the thermal runaway is shown, and the heat may be prevented from being transferred to adjacent battery cells 110.

The fire-extinguishing pipe 120 may include (e.g., may have) an insulating material. For example, the fire-extinguishing pipe 120 may include polyamide (PA), polycarbonate (PC), polyether ether ketone (PEEK), polyetherketoneketone (PEKK), polyphenylene sulfide (PPS), polyether imide (PEI), polyether sulfone (PES), or polyimide (PI). In some embodiments, the fire-extinguishing pipe 120 may include a material having a melting point of about 260°C or less.

The fire-extinguishing pipe 120 may be disposed at a point (e.g., at a height) within a range of about 30% to about 90% of the height of the battery cells 110. When the fire-extinguishing pipe 120 is disposed at a height in a range of about 30% to about 90% of the height of the battery cells 110, the fire-extinguishing pipe 120 rapidly melts near a battery cell 110 experiencing a thermal runaway, and then, the corresponding battery cell 110 is immersed in the fire-extinguishing agent to decrease its temperature, and the fire may be extinguished and the heat transfer to adjacent battery cells 110 may be blocked.

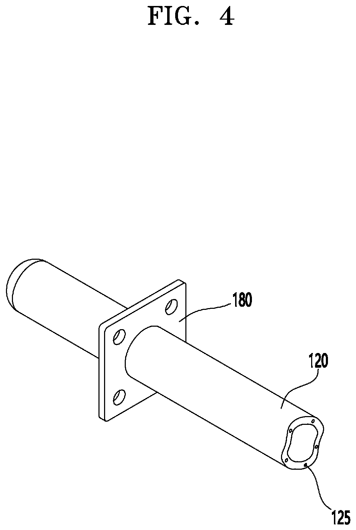

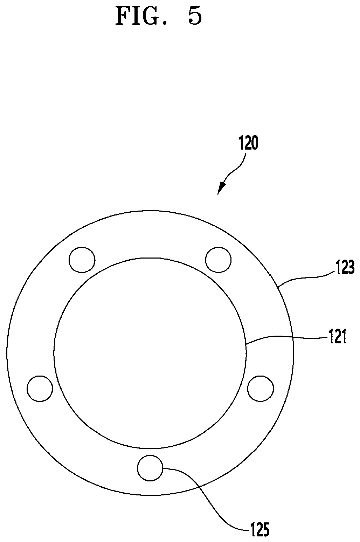

FIG. 4 is a perspective view of the fire-extinguishing pipe 120 and a stopper 180 shown in FIG. 3, and FIG. 5 is a schematic cross-sectional view of the fire-extinguishing pipe 120 shown in FIG. 4.

When assembling the fire-extinguishing pipe 120 with the battery module 100, the fire-extinguishing pipe 120 may be pushed from one side to the other side of the battery module 100. For example, the fire-extinguishing pipe 120 may extend from the end plate 170 (see, e.g., FIG. 1) at one side to the end plate 170 (see, e.g., FIG. 1) at the opposite side of the battery module 100.

The pair of end plates 170 (see, e.g., FIG. 1) may press the plurality of battery cells 110 in the direction in which the plurality of battery cells 110 are arranged. Because the end plates 170 press the battery cells 110 while facing the larger surfaces of the battery cells 110, a volume expansion of the battery cell 110 may be restrained in response to a swelling effect of the battery cell 110 and degradation of the performance of the battery cell 110 may be mitigated or prevented.

In addition, the battery module 100 may further include the stopper 180 as shown in FIG. 4 to define (e.g., to set) the position of the fire-extinguishing pipe 120. The stopper 180 may be located in an outer surface of the end plate 170 (see, e.g., FIG. 1), which corresponds to a point at where the fire-extinguishing pipe 120 extends to the outside of the battery module 100.

For example, the stopper 180 is disposed on the outer surface of at least one of the pair of end plates 170 (see, e.g., FIG. 1) to fix the fire-extinguishing pipe 120. For example, the stopper 180 contacts (e.g., rests on) the outer surface of at least one of the pair of end plates 170 in a direction perpendicular to the direction in which the fire-extinguishing pipe 120 extends and may define the position of the fire-extinguishing pipe 120.

The stopper 180 extends in the direction perpendicular to the direction in which the fire-extinguishing pipe 120 extends and fixes the fire-extinguishing pipe 120 to the battery module 100 to improve structural stability.

In addition, the fire-extinguishing pipe 120 is configured to melt at an area near the battery cell 110 experiencing a thermal runaway in the battery module 100 but is configured to not melt outside of the battery module 100. Thus, the fire-extinguishing pipe 120 outside the battery module 100 beyond the stopper 180 may include a material that has a higher melting point than that of the material in the fire-extinguishing pipe 120 in the battery module 100 so as not melt due to the thermal runaway of the battery cell 110.

The material of the stopper 180 may be the same as that included in the fire-extinguishing pipe 120 outside of the battery module 100 and may have a higher melting point than that of the fire-extinguishing pipe 120 in the battery module 100 so as to not melt due to the thermal runaway.

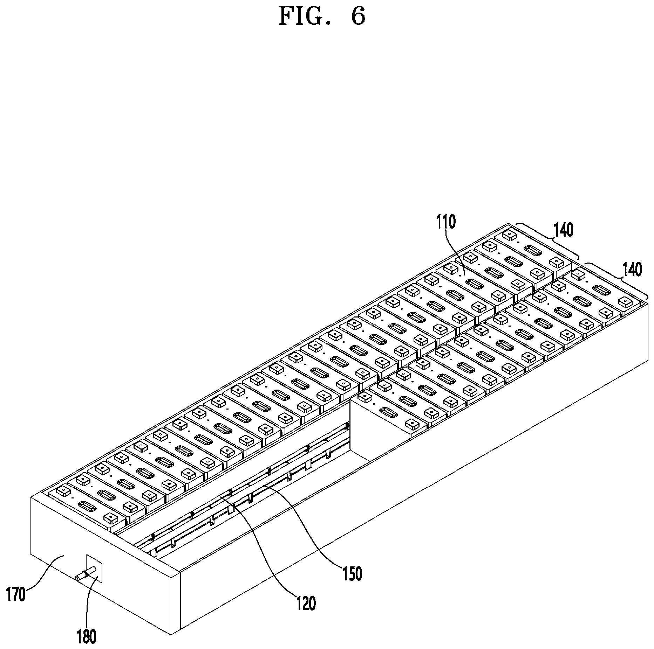

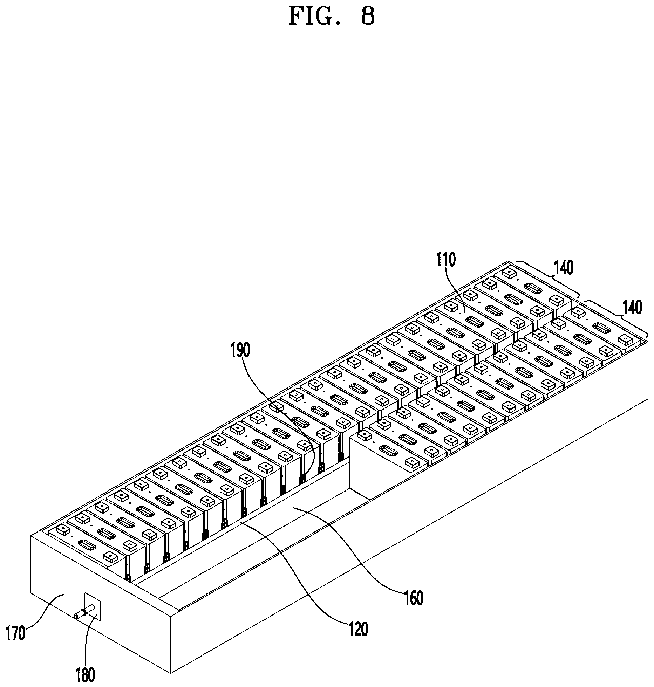

The material used in (e.g., included in or forming) the fire-extinguishing pipe 120 (e.g., PA, PC, etc.) is flexible, and accordingly, the fire-extinguishing pipe 120 may sag or curve. Thus, when assembling the fire-extinguishing pipe 120 with the battery module 100, interference with the other inner components of the battery module 100, for example, the battery cells 110, a spacer (e.g., 150 in FIG. 6 and 160 in FIG. 8), etc., may occur and it may be difficult to align the fire-extinguishing pipe 120 at a precise position. As described above, if a defective assembly caused by the interference between the fire-extinguishing pipe 120 and the other inner components results, the fire-extinguishing pipe 120 may not function to extinguish a fire, and another issue such as a short-circuit, etc. due to the damage to the exterior of the battery cells 110 may occur.

However, according to embodiments of the present disclosure, as shown in FIG. 5, the fire-extinguishing pipe 120 has a plurality of metal knitting yarns 125 between an inner surface 121 and an outer surface 123 of the fire-extinguishing pipe 120, and accordingly, the rigidity of the fire-extinguishing pipe 120 is increased. Accordingly, even as a length of the fire-extinguishing pipe 120 increases, an issue such as sagging, etc. may be prevented, and thus, the interference of the fire-extinguishing pipe 120 with the other components in the battery module 100 when assembling the fire-extinguishing pipe 120 may be prevented, and the fire-extinguishing pipe 120 may be aligned at a precise location.

The material in the fire-extinguishing pipe 120, except for the metal knitting yarn 125, may include PA, PC, etc., and may maintain the fire-extinguishing function during the thermal runaway of the battery cell 110.

The metal knitting yarn 125 may extend in (e.g., may extend through) the fire-extinguishing pipe 120 in the direction in which the plurality of battery cells 110 are arranged. Also, the plurality of metal knitting yarns 125 may be arranged to be spaced apart from one another with an interval (e.g., a certain or repeating interval) in a circumferential direction of the fire-extinguishing pipe 120, between the inner surface 121 and the outer surface 123 of the fire-extinguishing pipe 120. In an embodiment, three or more metal knitting yarns 125 may be arranged in the fire-extinguishing pipe 120.

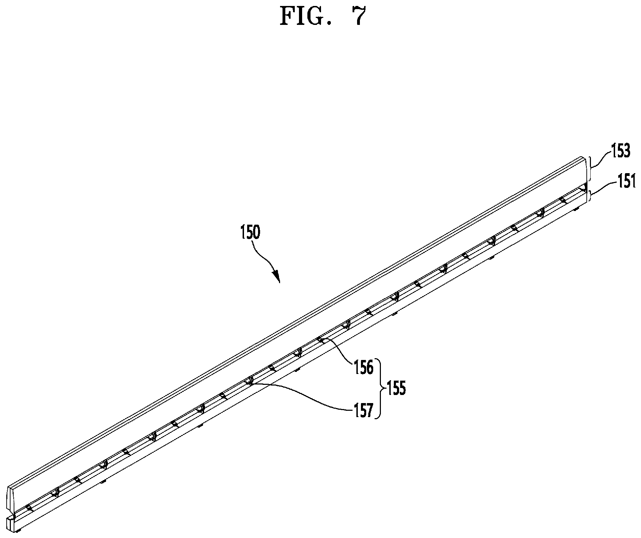

FIG. 6 is a perspective view of the battery module 100 shown in FIG. 1, and FIG. 7 is a perspective view of the spacer 150 included in the battery module 100 shown in FIG. 6.

Referring to FIG. 6, the battery module 100, according to an embodiment of the present disclosure, may include two columns of cell units 140 including the plurality of battery cells 110 arranged in one direction, the spacer 150 located between the two columns of cell units 140, the fire-extinguishing pipe 120 extending in the direction in which the battery cells 110 are arranged in the center of the spacer 150, the pair of end plates 170 pressing the two columns of cell units 140 in the direction in which the plurality of battery cells 110 are arranged, and the stopper 180 located in the outer surface of at least one of the end plates 170 to define the location of the fire-extinguishing pipe 120.

The fire-extinguishing pipe 120 is fixed to the spacer 150 located between the two columns of cell units 140 and extends in the direction in which the battery cells 110 are arranged, and then, may extend to the outside of the battery module 100 beyond the end plates 170. Because there are two columns of cell units 140 in the illustrated embodiment, the fire-extinguishing pipe 120 extends through the centers of the pair of end plates 170 so that the location of the fire-extinguishing pipe 120 may be defined by the stopper 180 in the outer surface of the end plate 170.

The spacer 150 is located between the plurality of cell units 140 and may have a thickness corresponding to a gap between the cell units 140. Also, the spacer 150 may extend in the direction in which the battery cells 110 are arranged to correspond to a length of the cell unit 140.

The fire-extinguishing pipe 120 extending in the direction in which the battery cells 110 are arranged may be fixed to a part of the spacer 150. For example, the fire-extinguishing pipe 120 may be fixed to the spacer 150 at a point located within a range of about 30% to about 90% of the height of the battery cells 110.

The spacer 150 fixes the fire-extinguishing pipe 120 to reduce a risk of interference when assembling the fire-extinguishing pipe 120 with the battery module 100 and to improve the structural stability. The spacer 150 is disposed between the cell units 140, and thus, when a thermal runaway occurs in the battery cell 110 included in one of the cell units 140, heat transfer to the other cell unit 140 may be reduced or prevented.

Referring to FIG. 7, the spacer 150 may include a lower spacer 151, an upper spacer 153 located above the lower spacer 151 and spaced apart from the lower spacer 151, and a plurality of guide portions 155 connecting the lower spacer 151 to the upper spacer 153.

The lower spacer 151 and the upper spacer 153 structurally separate the cell units 140, and thus, when the thermal runaway occurs in one of the cell units 140, the heat transfer to the other cell unit 140 may be reduced or prevented.

The plurality of guide portions 155 connect the lower spacer 151 and the upper spacer 153 to each other and may fix the fire-extinguishing pipe 120 to the spacer 150. The plurality of guide portions 155 may be located within a range of about 30% to about 90% of the height of the battery cells 110 so that the fire-extinguishing pipe 120 may exhibit an improved fire-extinguishing effect by rapidly melting during the thermal runaway and allowing the battery cells 110 to be quickly immersed in the fire-extinguishing agent to reduce the temperature.

The plurality of guide portions 155 may have convex shapes so as to at least partially surround (e.g., to extend around) the outer surface of the fire-extinguishing pipe 120 and may face adjacent battery cells 110. For example, a part of the fire-extinguishing pipe 120 may be exposed to the battery cells 110.

For example, the plurality of guide portions 155 may include first guides 156 and second guides 157 having convex shapes respectively facing the cell units 140 on the opposite sides of the spacer 150 with respect to the fire-extinguishing pipe 120. The first guides 156 and the second guides 157 are alternately arranged with each other so as to easily couple and stably support the fire-extinguishing pipe 120.

In an example, when the spacer 150 is viewed from the direction in which the spacer 150 extends, the first guides 156 and the second guides 157 may have semicircular shapes that are repeatedly arranged on right and left sides of the spacer 150.

By appropriately adjusting thicknesses of the first guides 156 and the second guides 157 and the separation gap between the first guides 156 and the second guides 157, the fire-extinguishing pipe 120 may be guided through the spacer 150 to reduce the risk of interference, and the fire-extinguishing pipe 120 may rapidly melt during the thermal runaway to improve its fire-extinguishing effect.

A second spacer 190 may be disposed between the battery cells 110 (e.g., between adjacent battery cells 110) included in one cell unit 140. The second spacer 190 is located between the battery cells 110 and may reduce or prevent the heat from one battery cell 110 from transferring to adjacent battery cells 110 when a thermal runaway occurs.

The second spacer 190 may improve the stability of the battery cells 110 by insulating and heat-insulating the battery cells 110 from each other. Also, the second spacer 190 is installed to support one side surface of the battery cell 110, and thus, facilitates the alignment of the battery cells 110 during the assembly of the battery module 100 and prevents the battery cells 110 from warping, thereby improving the structural stability.

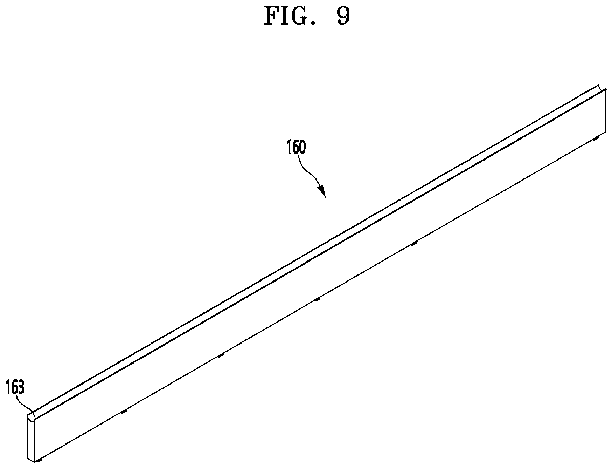

FIG. 8 is a perspective view of a battery module according to another embodiment, and FIG. 9 is a perspective view of a spacer 160 included in the battery module shown in FIG. 8.

FIG. 8 shows a spacer 160 according to another embodiment. The battery module, according to the illustrated embodiment, may include two columns of cell units 140 including the plurality of battery cells 110 arranged in one direction, the spacer 160 located between the two columns of cell units 140, the fire-extinguishing pipe 120 extending in the direction in which the battery cells 110 are arranged on an upper surface of the spacer 160, the pair of end plates 170 pressing the two columns of cell units 140 in the direction in which the plurality of battery cells 110 are arranged, the stopper 180 located in the outer surface of at least one of the end plates 170 to define the location of the fire-extinguishing pipe 120, and the second spacer 190 between the battery cells 110.

The spacer 160 is located between the cell units 140 and may have a thickness corresponding to a gap between the cell units 140. Also, the spacer 160 may extend in the direction in which the battery cells 110 are arranged to correspond to a length of the cell unit 140.

The fire-extinguishing pipe 120 is disposed on the upper surface of the spacer 160 located between the two columns of cell units 140 and extends in the direction in which the battery cells 110 are arranged and may extend to the outside of the battery module 100 beyond the end plates 170. In the illustrated embodiment, because there are two columns of cell units 140, the fire-extinguishing pipe 120 extends through the centers of the pair of end plates 170 so that the location of the fire-extinguishing pipe 120 may be defined by the stopper 180 on the outer surface of the end plate 170.

A height of the spacer 160 may be set to be about 30% to about 90% of the height of the battery cells 110 so that the fire-extinguishing effect may be obtained, that is, the fire-extinguishing pipe 120 rapidly melts during the thermal runaway and the corresponding battery cell(s) 110 are immersed in the fire-extinguishing agent to reduce their temperature. For example, the fire-extinguishing pipe 120 may be disposed at a point within a range of about 30% to about 90% of the height of the battery cells 110.

The spacer 160 may provide the same or substantially the same effect as the spacer 150, described above with reference to FIGS. 6 and 7.

The end plates 170 may press the two columns of cell units 140 in the direction in which the plurality of battery cells 110 are arranged. The end plates 170 may have the same or substantially the same effect as that described above with reference to FIGS. 6 and 7, and the stopper 180 may be disposed at the same point.

The second spacer 190 may be disposed between the battery cells 110.

The fire-extinguishing pipe 120 is located on the upper surface of the spacer 160, and the upper surface of the spacer 160 may have a shape conforming to the outer surface of the fire-extinguishing pipe 120 so that the spacer 160 may be stably located thereon.

For example, a cross-sectional shape of the fire-extinguishing pipe 120 in a direction perpendicular to the lengthwise direction is a circular shape, and the spacer 160 may have a concave portion 163 in the upper surface thereof so that the fire-extinguishing pipe 120 may be stably seated thereon.

The concave portion 163 may guide the fire-extinguishing pipe 120 to reduce the risk of interference. Also, a part of the fire-extinguishing pipe 120 is exposed to the battery cells 110 to maximize the fire-extinguishing effect. In an embodiment, the concave portion 163 may have a semicircular shape.

The present disclosure has been described in detail. However, it should be understood that the detailed description, while describing embodiments of the present disclosure, are given by way of illustration only, because various changes and modifications within the scope of the present disclosure will become apparent to one of ordinary skill in the art from this detailed description.

According to embodiments of the present disclosure, because the fire-extinguishing pipe is located in the battery module, when a thermal runaway occurs in a battery cell, the corresponding battery cell may be immediately extinguished, to thereby improve the stability of the battery module.

Also, the fire-extinguishing pipe includes metal knitting yarns to increase the rigidity of the fire-extinguishing pipe, and thus, the structural stability of the battery module may be improved.

Aspects and features of the present disclosure may be non-limited by the above-mentioned aspects and features. Other unmentioned aspects and features may be clearly understood from the following description by one of ordinary skill in the art to which the present disclosure pertains.

It should be understood that embodiments described herein should be considered in a descriptive sense and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims and their equivalents.

## Claims

1. A battery module comprising:
a plurality of battery cells arranged in parallel in a first direction;
a housing accommodating the plurality of battery cells; and
a fire-extinguishing pipe in the housing and extending in the first direction, the fire-extinguishing pipe comprising a plurality of metal knitting yarns between an inner surface and an outer surface of the fire-extinguishing pipe, the plurality of metal knitting yarns extending in the first direction and being spaced apart from one another in a circumferential direction of the fire-extinguishing pipe.

2. The battery module of claim 1, further comprising a spacer,
wherein ones of the plurality of battery cells form a plurality of cell units, the plurality of cell units being arranged in a second direction perpendicular to the first direction,
wherein the spacer is arranged between the plurality of cell units, and
wherein the fire-extinguishing pipe is fixed to the spacer.

3. The battery module of claim 2, wherein the spacer comprises a lower spacer, an upper spacer above the lower spacer and spaced apart from the lower spacer, and a plurality of guide portions connecting the lower spacer and the upper spacer to each other,
wherein the plurality of guide portions fix a location of the fire-extinguishing pipe, and
wherein the guide portions each have a convex shape to at least partially surround an outer surface of the fire-extinguishing pipe and face the battery cells.

4. The battery module of claim 3, wherein the plurality of guide portions comprises first guides and second guides having convex shapes facing the cell units on opposite sides with respect to the fire-extinguishing pipe, and
wherein the first guides and the second guides are alternately arranged.

5. The battery module of any one of claims 2 to 4, wherein the fire-extinguishing pipe is fixed at a point within a range of 30% to 90% of a height of the battery cells.

6. The battery module of any one of claims 2 to 5, further comprising:
a pair of end plates pressing the plurality of cell units in the first direction; and
a stopper located in at least one of the pair of end plates and to which the fire-extinguishing pipe is coupled,
wherein the stopper is on an outer surface of at least one of the pair of end plates in a direction perpendicular to the first direction to define a position of the fire-extinguishing pipe.

7. The battery module of any one of claims 2 to 5, wherein the fire-extinguishing pipe is on an upper surface of the spacer.

8. The battery module of claim 7, wherein the upper surface of the spacer has a shape conforming to the outer surface of the fire-extinguishing pipe.

9. The battery module of claim 8, wherein a height of the spacer is within a range of 30% to 90% of a height of the battery cells.

10. A battery module comprising:
a plurality of cell units each comprising a plurality of battery cells arranged in parallel in a first direction and arranged in a second direction perpendicular to the first direction;
a spacer extending between the plurality of cell units in the first direction; and
a fire-extinguishing pipe on an upper surface of the spacer.

11. The battery module of claim 10, wherein the upper surface of the spacer has a shape conforming to an outer surface of the fire-extinguishing pipe.

12. The battery module of claim 10 or claim 11, wherein a height of the spacer is within a range of 30% to 90% of a height of the battery cells.

13. The battery module of any one of claims 10 to 12, wherein the fire-extinguishing pipe comprises a plurality of metal knitting yarns between an inner surface and an outer surface of the fire-extinguishing pipe, and
wherein the plurality of metal knitting yarns extend in the first direction and are spaced apart from one another in a circumferential direction of the fire-extinguishing pipe.

14. The battery module of claim 13, wherein the plurality of metal knitting yarns comprises three or more metal knitting yarns.

15. The battery module of any one of claims 10 to 14, further comprising a pair of end plates pressing the plurality of cell units in a direction parallel to the first direction,
further comprising a stopper in at least one of the pair of end plates and to which the fire-extinguishing pipe is coupled,
wherein the stopper is on an outer surface of at least one of the pair of end plates in a direction perpendicular to the first direction to define a position of the fire-extinguishing pipe.
